# EUROPÄISCHE PATENTSCHRIFT

(11) **EP 2 247 861 B1**
(45) Veröffentlichungstag und Bekanntmachung des Hinweises auf die Patenterteilung: **12.06.2019**
(21) Anmeldenummer: 08871812.7
(22) Anmeldetag: 23.10.2008
(51) Int. Cl.: F15B 15/14, F16H 61/30

(54) **PNEUMATIKZYLINDER**
PNEUMATIC CYLINDER
VÉRIN PNEUMATIQUE

(30) Priorität: 29.01.2008 DE 102008006384
(43) Veröffentlichungstag der Anmeldung: 10.11.2010
(73) Patentinhaber: WABCO GmbH, 30453 Hannover (DE)
(72) Erfinder: ECKELT, Gunter, 31515 Wunstorf (DE); EISFELDER, Stephan, 30926 Seelze (DE); HEURICH, Mike, 31552 Apelern (DE); HÖLSCHER, Reiner, 30926 Seelze (DE); WIGGERS, Tino, 30926 Seelze (DE)
(74) Vertreter: Lauerwald, Jörg
(86) Internationale Anmeldenummer: PCT/EP2008/008976
(87) Internationale Veröffentlichungsnummer: WO 2009/095045

(56) Entgegenhaltungen:
- EP-A- 0 803 651
- GB-A- 1 061 175
- US-A- 3 031 853
- US-A- 5 749 264

## Beschreibung

Die Erfindung betrifft einen Pneumatikzylinder mit einem Zylindergehäuse, einem im Zylindergehäuse längs beweglichen Zentralkolben, einem ersten Schleppkolben, der zum Zusammenwirken mit einem ersten Schleppanschlag des Zentralkolbens und einem ersten Positionieranschlag am Zylindergehäuse ausgebildet ist, und einem zweiten Schleppkolben, der zum Zusammenwirken mit einem zweiten Schleppanschlag des Zentralkolbens und einem zweiten Positionieranschlag am Zylindergehäuse ausgebildet ist. Derartige Pneumatikzylinder werden beispielsweise in Getriebestellern eingesetzt und sind auch als 3-Stellungs-Zylinder bekannt.

Derartige Pneumatikzylinder besitzen einen Grundkörper und zwei beidseits des Grundkörpers angeordnete Zylinderdeckel. Zur Herstellung bekannter Pneumatikzylinder werden zunächst der Zentralkolben und die Schleppkolben am Grundkörper befestigt. Danach werden beidseits des Grundkörpers Zylinderdeckel aufgeschraubt und jeweils mit Dichtmitteln gegenüber dem Grundkörper abgedichtet.

Nachteilig an bekannten Pneumatikzylindern (siehe US5749264) ist deren aufwändige Herstellung.

So müssen an dem Grundkörper zwei Zylinderdeckel justiert und mit jeweils einer Dichtung versehen werden.

Der Erfindung liegt die Aufgabe zugrunde, einen Pneumatikzylinder bereitzustellen, der einfacher und prozesssicherer zu produzieren ist.

Die Erfindung löst das Problem durch einen gattungsgemäßen Pneumatikzylinder, bei dem das Zylindergehäuse einen Grundkörper, in dem der erste Schleppkolben läuft, einen Zylinderdeckel, in dem der zweite Schleppkolben läuft, und eine Zwischenscheibe, an der erste Positionieranschlag und der zweite Positionieranschlag ausgebildet sind, umfasst.

Vorteilhaft hieran ist die einfache Herstellungsweise. Dazu wird zunächst der Grundkörper hergestellt. Anschließend werden der Zentralkolben und der erste und der zweite Schleppkolben in den Grundkörper eingebracht. Anschließend wird die Zwischenscheibe auf den Grundkörper aufgelegt und beides mit dem Zylinderdeckel abgedeckt. Das Verbinden des Zylindergehäuses geschieht damit in einem Schritt und nicht wie bei bekannten Pneumatikzylindern in zwei Schritten. Der erfindungsgemäße Pneumatikzylinder kann zudem so ausgebildet sein, dass nur ein Dichtelement benötigt wird, was zu einer Materialeinsparung führt. Es ist ein weiterer Vorteil, dass das Zylindergehäuse des erfindungsgemäßen Pneumatikzylinders aus hinterscheidungsfreien Komponenten besteht. Diese sind zudem sehr einfach zu fertigen, so dass der Fertigungsaufwand sinkt. Es ist ein weiterer Vorteil, dass der erfindungsgemäße Pneumatikzylinder im Fall einer Fehlfunktion leicht demontierbar und wieder montierbar ist.

Im Rahmen der vorliegenden Beschreibung kann die Zwischenscheibe eine im mathematischen Sinne scheibenförmige Gestalt haben, muss dies aber nicht. Die Höhe der Zwischenscheibe, also deren Erstreckung in Längsrichtung des Zentralkolbens, ist jedoch deutlich kleiner als ihre Breite, also ihre Erstreckung senkrecht zur Längsrichtung des Zentralkolbens. Beispielsweise beträgt die Höhe der Zwischenscheibe weniger als ein Viertel ihrer Breite, insbesondere als ein Achtel ihrer Breite.

In einer bevorzugten Ausführungsform umfasst der Pneumatikzylinder mindestens ein Verbindungselement, das den Zylinderdeckel gegen die Zwischenscheibe und die Zwischenscheibe gegen den Grundkörper verspannt. In anderen Worten klemmt das mindestens eine Verbindungselement die Zwischenscheibe zwischen Grundkörper und Zylinderdeckel. Beispielsweise ist das Verbindungselement eine Schraube, mittels der der Zylinderdeckel gegen den Grundkörper verspannt wird. Die zwischen dem Grundkörper und dem Zylinderdeckel angeordnete Zwischenscheibe befindet sich entweder radial zwischen mehreren Verbindungselementen oder wird von diesen zumindest teilweise durchgriffen. Vorteilhaft daran ist die besonders einfache Montierbarkeit und die Tatsache, dass gegenüber herkömmlichen Pneumatikzylindern die Zahl der Verbindungselemente reduziert werden kann.

Besonders bevorzugt umfasst das Verbindungselement eine Zentrierhülse, die in jeweils eine Zentrierbohrung im Grundkörper und im Zylinderdeckel eingepasst ist. Gegebenenfalls durchgreift die Zentrierhülse eine Bohrung in der Zwischenscheibe oder ist in diese Bohrung eingepasst. Durch die Zentrierhülse können der Grundkörper und der Zylinderdeckel präzise relativ zueinander justiert werden, was einen verschleißarmen Lauf des Zentralkolbens bei einer gleichzeitig einfachen und schnellen Fertigung ermöglicht.

Besonders bevorzugt ist der Zylinderdeckel mittels eines Dichtelements gegen das Zylindergehäuse abgedichtet. Dabei besteht ein Kontakt zwischen dem Dichtelement und dem Zylindergehäuse und gleichzeitig zwischen dem Dichtelement und dem Zylinderdeckel. Es ist folglich nur ein einziges Dichtelement notwendig, um den Zylinderdeckel gegen den Grundkörper abzudichten. Das kann beispielsweise dadurch erreicht werden, dass das Dichtelement bezüglich einer Längsachse des Zentralkolbens radial außerhalb der Zwischenscheibe angeordnet ist. Es ergibt sich so eine besonders einfache Konstruktion, die mit nur einem Dichtelement auskommt. Alternativ ist die Zwischenscheibe beispielsweise über zwei beidseits in Kontakt mit der Zwischenscheibe stehende Dichtelemente abgedichtet.

Gemäß einer bevorzugten Ausführungsform besitzt die Zwischenscheibe beidseits mindestens einen Dichtabschnitt, insbesondere einen aufvulkanisierten Gummi-Dichtabschnitt. In anderen Worten besitzt die Zwischenscheibe einen ersten Dichtabschnitt, der die Zwischenscheibe gegenüber dem Grundkörper abdichtet und einen zweiten Dichtabschnitt, der die Zwischenscheibe gegen den Zylinderdeckel abdichtet. Hieran ist vorteilhaft, dass durch das Einlegen der Zwischenscheibe auf den Grundkörper und das anschließende Montieren des Zylinderdeckels am Grundkörper gleichzeitig eine Zentrierung von Grundkörper und Zylinderdeckel und eine Abdichtung aller Komponenten erreicht wird. Es wird so eine besonders einfache Fertigung ermöglicht.

Ein Zentrieren der Zwischenscheibe relativ zum Grundkörper ist besonders einfach, wenn die Zwischenscheibe in eine Grundkörper-Ausnehmung im Grundkörper spielfrei eingepasst ist. Eine derartige spielfreie Passung ist besonders einfach zu fertigen, da es sich dann bei der Zwischenscheibe und der Grundkörper-Ausnehmung um kreisförmige Strukturen handelt, die mit sehr hoher Genauigkeit durch Drehen hergestellt werden können.

Besonders bevorzugt greift die Zwischenscheibe in eine Zylinderdeckel-Ausnehmung im Zylinderdeckel spielfrei ein, so dass der Zylinderdeckel senkrecht um eine Längsrichtung des Zentralkolbens spielfrei unverschieblich am Grundkörper fixiert ist. In anderen Worten ist die Zwischenscheibe spielfrei sowohl am Grundkörper als auch am Zylinderdeckel gelagert. Daraus resultiert eine Unverschiebbarkeit des Zylinderdeckels relativ zum Grundkörper in radialer Richtung. Auf diese Weise ergibt sich eine besonders einfache Fertigung. Der Grundkörper und der Zylinderdeckel können nämlich durch bloßes Auflegen der Zwischenscheibe auf den Grundkörper und des Zylinderdeckels auf die Zwischenscheibe hergestellt werden, wenn die Zwischenscheibe einen konvexen radialen Rand aufweist. Dadurch sind die Zwischenscheibe, der Grundkörper und der Zylinderdeckel selbstzentrierend. Etwaige Fertigungstoleranzen führen lediglich zu einer Verschiebung der Komponenten in Längsrichtung des Zentralkolbens. Beim anschließenden Verspannen von Zylinderdeckel und Grundkörper verformt sich die Zwischenscheibe elastisch und der Zylinderdeckel ist bezüglich seiner Aufnahmebohrung für den Zentralkolben zu der Aufnahmebohrung des Grundkörpers für den Zentralkolben ausgerichtet.

Besonders bevorzugt sind der erste Schleppkolbenanschlag und der erste Positionieranschlag bezüglich einer Längsachse des Zentralkolbens in einer Mittelstellung des Pneumatikzylinders im Wesentlichen auf einer Höhe angeordnet. In anderen Worten liegen der erste Schleppkolbenanschlag und der erste Positionieranschlag in einer Mittelstellung im Wesentlichen radial benachbart.

Auf gleiche Weise sind der zweite Schleppkolbenanschlag und der zweite Positionieranschlag in der Mittelstellung bevorzugt auf einer Höhe bezüglich der Längsachse des Zentralkolbens angeordnet. In der Mittelstellung liegen der erste Schleppkolbenanschlag und der erste Positionieranschlag einerseits und der zweite Schleppkolbenanschlag und der zweite Positionieranschlag andererseits damit gleichzeitig radial benachbart. In anderen Worten ist der Abstand zwischen dem ersten Schleppkolbenanschlag und dem zweiten Schleppkolbenanschlag im Wesentlichen so groß wie der Abstand zwischen dem ersten Positionieranschlag und dem zweiten Positionieranschlag.

Nachfolgend werden Ausführungsformen der Erfindung anhand der beigefügten Zeichnungen näher erläutert. Dabei zeigt
Figur 1 einen Pneumatikzylinder nach dem Stand der Technik,
Figur 2 einen Querschnitt durch einen erfindungsgemäßen Pneumatikzylinder gemäß einer ersten Ausführungsform,
Figur 3 einen erfindungsgemäßen Pneumatikzylinder gemäß einer zweiten Ausführungsform und
Figur 4 eine Explosionsansicht eines erfindungsgemäßen Pneumatikzylinders.

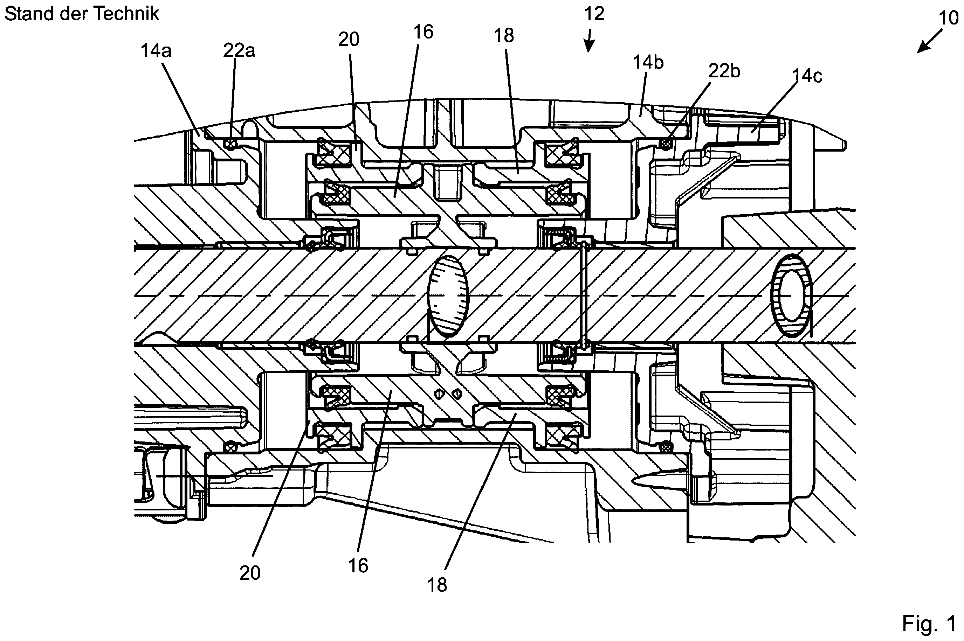

Figur 1 zeigt einen Pneumatikzylinder 10 nach dem Stand der Technik mit einem Zylindergehäuse 12, das die drei Zylindergehäuseteile 14a, 14b, 14c umfasst. Im Zylindergehäuse 12 läuft ein Zentralkolben 16. Der Pneumatikzylinder 10 umfasst zudem einen ersten Schleppkolben 18 und einen zweiten Schleppkolben 20. Zur Montage werden das erste Zylindergehäuseteil 14a und das dritte Zylindergehäuseteil 14c auf das zentrale Zylindergehäuseteil 14b montiert und durch jeweilige Dichtelemente 22a, 22b gegeneinander abgedichtet.

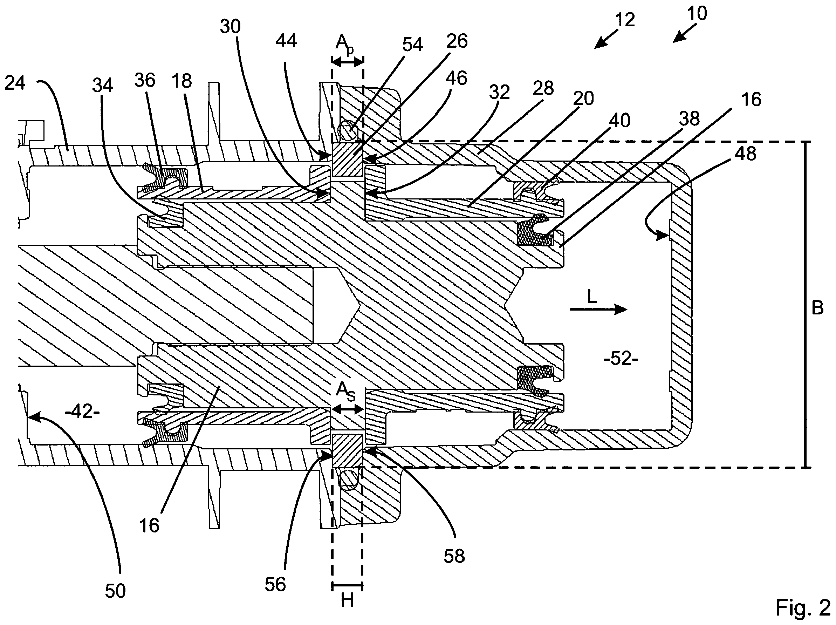

Figur 2 zeigt einen Querschnitt durch einen erfindungsgemäßen Pneumatikzylinder 10 mit dem Zylindergehäuse 12, das aus einem Grundkörper 24, einer Zwischenscheibe 26 und einem Zylinderdeckel 28 aufgebaut ist. Der Zentralkolben 16 besitzt einen ersten Schleppanschlag 30, gegen den der erste Schleppkolben 18 anschlagen kann. Der Zentralkolben 16 besitzt zudem einen zweiten Schleppanschlag 32, an den der zweite Schleppkolben 20 anschlagen kann.

Der erste Schleppkolben 18 ist über eine erste Dichtung 34 gegenüber dem Zentralkolben 16 und durch eine zweite Dichtung 36 gegenüber dem Grundkörper 24 abgedichtet. Auf analoge Weise ist der zweite Schleppkolben 20 durch eine Drittdichtung 38 gegenüber dem Zentralkolben 16 und durch eine vierte Dichtung 40 gegenüber dem Zylinderdeckel 28 abgedichtet.

Durch Einleiten von Druckluft in einen Grundkörperzylinder 42 bewegt sich der erste Schleppkolben 18 so weit auf den Zylinderdeckel 28 zu, bis er an einem ersten Positionieranschlag 44 der Zwischenscheibe 26 anschlägt. In diesem Moment, in dem der Pneumatikzylinder 10 in seiner Mittelstellung ist, sind der erste Schleppanschlag 30 und der erste Positionieranschlag 44 bezüglich einer Längsachse L des Zentralkolbens 16 auf einer Höhe angeordnet. Gleichzeitig ist der zweite Schleppanschlag 32 mit einem zweiten Positionieranschlag 46 bezüglich der Längsachse L auf einer Höhe angeordnet. Aus dem oben Gesagten ergibt sich, dass ein Abstand A_{P} zwischen dem ersten Positionieranschlag 44 und dem zweiten Positionieranschlag 46 gleich einem Abstand A_{S} zwischen dem ersten Schleppanschlag 30 und dem zweiten Schleppanschlag 32 ist. Als Anschläge sind dabei stets die Flächen gemeint, an die angeschlagen wird. Diese können speziell behandelt, beispielsweise gehärtet sein, müssen es aber nicht.

Wenn lediglich in dem Grundkörperzylinder 42 Druckluft anliegt, schiebt diese Druckluft den Zentralkolben 16 in Figur 2 so weit nach rechts, dass er an einer Innenstirnfläche 48 des Zylinderdeckels 28 anschlägt. Auf gleiche Weise wird der Zentralkolben 16 bis an eine zweite Innenstirnfläche 50 geschoben, wenn lediglich ein Deckelzylinder 52 im Zylinderdeckel 28 mit Druckluft beaufschlagt wird. Herrscht im Deckelzylinder 52 der gleiche Druck wie im Grundkörperzylinder 42, so nimmt der Zentralkolben 16 die in Figur 2 gezeigte Mittelstellung ein.

Der Grundkörper 24 und der Zylinderdeckel 28 sind über ein in Figur 2 nicht eingezeichnetes Verbindungselement in Form einer Schraube miteinander verbunden und über ein Dichtelement 54 in Form eines O-Rings gegeneinander abgedichtet.

Die Zwischenscheibe 26 ist in einer Grundkörperausnehmung 56 spielfrei aufgenommen. Im Zylinderdeckel 28 ist eine Zylinderdeckel-Ausnehmung 58 vorgesehen, in der die Zwischenscheibe 26 ebenfalls spielfrei aufgenommen ist. Auf diese Weise sind der Zylinderdeckel 28 und der Grundkörper 24 senkrecht und parallel zur Längsachse L spielfrei miteinander verbunden.

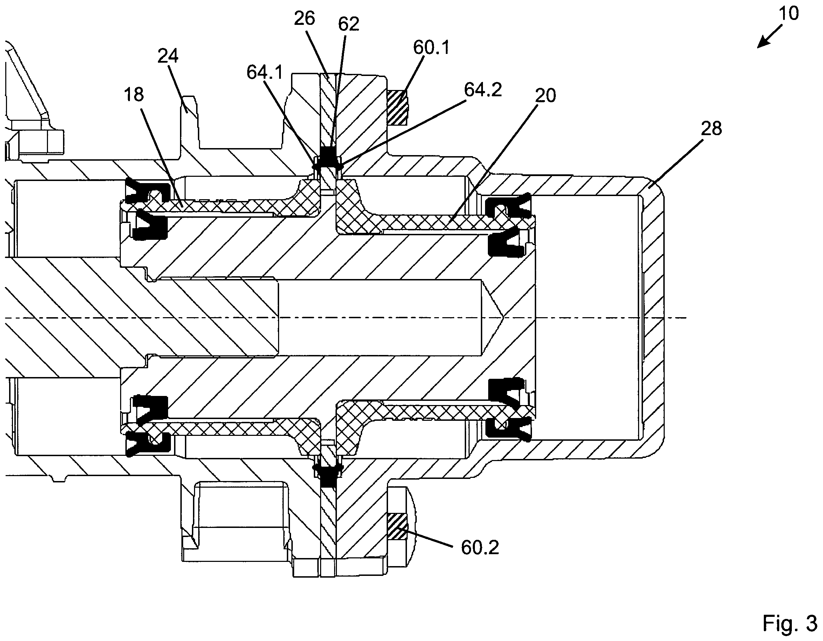

Figur 3 zeigt eine zweite Ausführungsform eines erfindungsgemäßen Pneumatikzylinders 10, bei dem der Grundkörper 24 und der Zylinderdeckel 28 über Verbindungselemente 60.1, 60.2 in Form von Maschinenschrauben miteinander verbunden sind. Die Zwischenscheibe 26 besitzt ein Dichtelement 62 in Form zweier beidseits aufvulkanisierter Gummi-Dichtabschnitte 64.1, 64.2.

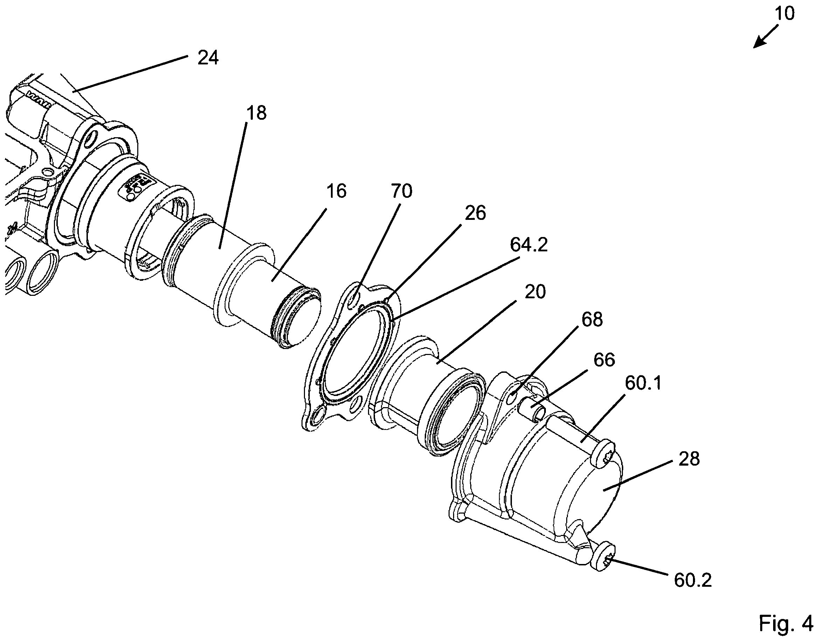

Figur 4 zeigt eine Explosionszeichnung des Pneumatikzylinders 10, der auch als Drei-Stellungs-Zylinder bezeichnet werden kann, da er, wie oben beschrieben, drei fest definierte Stellungen des Zentralkolbens 16 relativ zum Grundkörper 24 einnehmen kann. Es ist zu erkennen, dass das Verbindungselement 60.1 über eine Zentrierhülse 66.1, die in eine Zentrierbohrung eingepasst ist, durch eine Zentrierbohrung 70 in der Zwischenscheibe 26 verläuft und in eine weitere Zentrierbohrung 72 am Grundkörper 24 eingreift. Selbstverständlich ist es möglich, den Pneumatikzylinder 10 durch geeignete Federpakete so vorzuspannen, dass er in vier oder mehr definierte Stellungen bringbar ist.

## Patentansprüche

1. Pneumatikzylinder (10) mit
(a) einem Zylindergehäuse (12),
(b) einem im Zylindergehäuse (12) längs beweglichen Zentralkolben (16),
(c) einem ersten Schleppkolben (18), der zum Zusammenwirken mit
- einem ersten Schleppanschlag (30) des Zentralkolbens (16) und
- einem ersten Positionieranschlag (44) am Zylindergehäuse (12) ausgebildet ist und konzentrisch um den Zentralkolben (16) angeordnet ist und
(d) einem zweiten Schleppkolben (20), der zum Zusammenwirken mit
- einem zweiten Schleppanschlag (32) des Zentralkolbens (16) und
konzentrisch um den Zentralkolben (16) angeordnet ist
und
- einem zweiten Positionieranschlag (46) am Zylindergehäuse (12) ausgebildet ist,
wobei
(e) das Zylindergehäuse (12)
(i) einen Grundkörper (24), in dem der erste Schleppkolben (18) läuft,
(ii) einen Zylinderdeckel (28), in dem der zweite Schleppkolben (20) läuft, und
(iii) eine Zwischenscheibe (26), an der der erste Positionieranschlag (44) und der zweite Positionieranschlag (46) ausgebildet sind,
umfasst, **dadurch gekennzeichnet, dass**
(iv) ein Abstand (A_{P}) zwischen dem ersten Positionieranschlag (44) und dem zweiten Positionieranschlag (46) gleich einem Abstand (A_{S}) zwischen dem ersten Schleppanschlag (30) und dem zweiten Schleppanschlag (32) ist.

2. Pneumatikzylinder (10) nach Anspruch 1, **gekennzeichnet durch** mindestens ein Verbindungselement (60), das den Zylinderdeckel (28) gegen die Zylinderscheibe und die Zwischenscheibe (26) gegen den Grundkörper (24) verspannt.

3. Pneumatikzylinder (10) nach Anspruch 2, **dadurch gekennzeichnet, dass** das Verbindungselement (60) mindestens eine Zentrierhülse (66) umfasst, die in jeweils eine Zentrierbohrung (68) im Grundkörper (24) und im Zylinderdeckel (28) eingepasst ist.

4. Pneumatikzylinder (10) nach einem der vorstehenden Ansprüche, **dadurch gekennzeichnet, dass** der Zylinderdeckel (28) mittels eines Dichtelements (54) gegen das Zylindergehäuse (12) abgedichtet ist.

5. Pneumatikzylinder (10) nach einem der vorstehenden Ansprüche, **dadurch gekennzeichnet, dass** die Zwischenscheibe (26) beidseits mindestens einen Dichtabschnitt (64), insbesondere einen aufvulkanisierten Gummi-Dichtabschnitt, besitzt.

6. Pneumatikzylinder (10) nach einem der vorstehenden Ansprüche, **dadurch gekennzeichnet, dass** die Zwischenscheibe (26) in eine Grundkörper-Ausnehmung (56) im Grundkörper (24) spielfrei eingepasst ist.

7. Pneumatikzylinder (10) nach Anspruch 6, **dadurch gekennzeichnet, dass** die Zwischenscheibe (26) in eine Zylinderdeckel-Ausnehmung (58) im Zylinderdeckel (28) spielfrei eingepasst ist, so dass der Zylinderdeckel (28) senkrecht zu einer Längsrichtung des Zentralkolbens (16) spielfrei unverschieblich am Grundkörper (24) fixiert ist.

8. Pneumatikzylinder (10) nach einem der vorstehenden Ansprüche, **dadurch gekennzeichnet, dass** die Zwischenscheibe (26) einen konvexen radialen Rand aufweist.

9. Getriebesteller mit einem Pneumatikzylinder (10) nach einem der vorstehenden Ansprüche.

10. Verfahren zum Herstellen eines Pneumatikzylinders (10) nach Anspruch 1, mit den Schritten
(a) Herstellen eines Grundkörpers (24), eines Zylinderdeckels (28) und einer Zwischenscheibe (26) eines Zylindergehäuses (12),
(b) Auflegen der Zwischenscheibe (26) auf den Grundkörper (24) oder den Zylinderdeckel (28) und
(c) Verbinden der Zwischenscheibe (26), des Grundkörpers (24) und des Zylinderdeckels (28).

11. Verfahren nach Anspruch 10, **dadurch gekennzeichnet, dass** das Verbinden der Zwischenscheibe (26), des Grundkörpers (24) und des Zylinderdeckels (28) in einem gemeinsamen Arbeitsschritt erfolgt.

## Claims

1. Pneumatic cylinder (10) with
(a) a cylinder housing (12),
(b) a central piston (16) movable longitudinally in the cylinder housing (12),
(c) a first trailing piston (18) which is designed to cooperate with
- a first trailing stop (30) of the central piston (16) and
- a first positioning stop (44) on the cylinder housing (12), and
is arranged concentrically around the central piston (16) and
(d) a second trailing piston (20) which is designed to cooperate with
- a second trailing stop (32) of the central piston (16) and
is arranged concentrically around the central piston (16) and
- a second positioning stop (46) on the cylinder housing (12),
wherein
(e) the cylinder housing (12) comprises
(i) a basic body (24) in which the first trailing piston (18) runs,
(ii) a cylinder cover (28) in which the second trailing piston (20) runs, and
(iii) an intermediate disc (26) on which the first positioning stop (44) and the second positioning stop (46) are formed, **characterized in that**
(iv) a distance (Ap) between the first positioning stop (44) and the second position stop (46) is equal to a distance (As) between the first trailing stop (30) and the second trailing stop (32).

2. Pneumatic cylinder (10) according to Claim 1, **characterized by** at least one connecting element (60) which braces the cylinder cover (28) against the cylinder disc and the intermediate disc (26) against the basic body (24).

3. Pneumatic cylinder (10) according to Claim 2, **characterized in that** the connecting element (60) comprises at least one centring sleeve (66) which is fitted in each case into a centring bore (68) in the basic body (24) and in the cylinder cover (28).

4. Pneumatic cylinder (10) according to one of the preceding claims, **characterized in that** the cylinder cover (28) is sealed off with respect to the cylinder housing (12) by means of a sealing element (54).

5. Pneumatic cylinder (10) according to one of the preceding claims, **characterized in that** the intermediate disc (26) possesses on both sides at least one sealing portion (64), in particular a vulcanized-on rubber sealing portion.

6. Pneumatic cylinder (10) according to one of the preceding claims, **characterized in that** the intermediate disc (26) is fitted, free of play, into a basic-body recess (56) in the basic body (24).

7. Pneumatic cylinder (10) according to Claim 6, **characterized in that** the intermediate disc (26) is fitted, free of play, into a cylinder-cover recess (58) in the cylinder cover (28), so that the cylinder cover (28) is immovably fixed, free of play, to the basic body (24) perpendicularly to a longitudinal direction of the central piston (16).

8. Pneumatic cylinder (10) according to one of the preceding claims, **characterized in that** the intermediate disc (26) has a convex radial margin.

9. Transmission actuator having a pneumatic cylinder (10) according to one of the preceding claims.

10. Method for producing a pneumatic cylinder (10) according to Claim 1, with the steps
(a) production of a basic body (24), of a cylinder cover (28) and of an intermediate disc (26) of a cylinder housing (12),
(b) laying of the intermediate disc (26) onto the basic body (24) or the cylinder cover (28), and
(c) connection of the intermediate disc (26), of the basic body (24) and of the cylinder cover (28).

11. Method according to Claim 10, **characterized in that** the connection of the intermediate disc (26), of the basic body (24) and of the cylinder (28) takes place in one common work step.

## Revendications

1. Vérin pneumatique (10) comprenant
(a) un corps de vérin (12),
(b) un piston central (16) mobile longitudinalement dans le corps de vérin (12),
(c) un premier piston entraîné (18), lequel est conçu pour coopérer avec
- une première butée entraînée (30) du piston central (16) et
- une première butée de positionnement (44) sur le corps de vérin (12) et
est disposé de manière concentrique autour du piston central (16) et
(d) un deuxième piston entraîné (20), lequel est conçu pour coopérer avec
- une deuxième butée entraînée (32) du piston central (16) et
est disposé de manière concentrique autour du piston central (16), et
- une deuxième butée de positionnement (46) sur le corps de vérin (12),
(e) le corps de vérin (12) comportant
(i) un corps de base (24) dans lequel le premier piston entraîné (18) se déplace,
(ii) un couvercle de vérin (28) dans lequel le deuxième piston entraîné (20) se déplace et
(iii) un disque intermédiaire (26) sur lequel sont formées la première butée de positionnement (44) et la deuxième butée de positionnement (46), **caractérisé en ce que**
(iv) une distance (A_{P}) entre la première butée de positionnement (44) et la deuxième butée de positionnement (46) est égale à une distance (A_{S}) entre la première butée entraînée (30) et la deuxième butée entraînée (32).

2. Vérin pneumatique (10) selon la revendication 1, **caractérisé par** au moins un élément de liaison (60) qui serre le couvercle de vérin (28) contre le disque de vérin et le disque intermédiaire (26) contre le corps de base (24).

3. Vérin pneumatique (10) selon la revendication 2, **caractérisé en ce que** l'élément de liaison (60) comporte au moins une douille de centrage (66) qui est emboîtée dans respectivement un alésage de centrage (68) dans le corps de base (24) et dans le couvercle de vérin (28).

4. Vérin pneumatique (10) selon l'une quelconque des revendications précédentes, **caractérisé en ce que** le couvercle de vérin (28) est rendu étanche par rapport au corps de vérin (12) au moyen d'un élément d'étanchéité (54).

5. Vérin pneumatique (10) selon l'une quelconque des revendications précédentes, **caractérisé en ce que** le disque intermédiaire (26) comporte des deux côtés au moins une partie d'étanchéité (64), en particulier une partie d'étanchéité en caoutchouc vulcanisée.

6. Vérin pneumatique (10) selon l'une quelconque des revendications précédentes, **caractérisé en ce que** le disque intermédiaire (26) est emboîté sans jeu dans un évidement (56) dans le corps de base (24).

7. Vérin pneumatique (10) selon la revendication 6, **caractérisé en ce que** le disque intermédiaire (26) est emboîté sans jeu dans un évidement (58) dans le couvercle de vérin (28), de telle sorte que le couvercle de vérin (28) soit fixé sans jeu perpendiculairement à une direction longitudinale du piston central (16) et de manière immobile sur le corps de base (24).

8. Vérin pneumatique (10) selon l'une quelconque des revendications précédentes, **caractérisé en ce que** le disque intermédiaire (26) comprend un bord radial convexe.

9. Actionneur de boîte de vitesses comprenant un vérin pneumatique (10) selon l'une quelconque des revendications précédentes.

10. Procédé de fabrication d'un vérin pneumatique (10) selon la revendication 1, comprenant les étapes consistant à
(a) fabriquer un corps de base (24), un couvercle de vérin (28) et un disque intermédiaire (26) d'un corps de vérin (12),
(b) appliquer le disque intermédiaire (26) sur le corps de base (24) ou le couvercle de vérin (28) et
(c) relier le disque intermédiaire (26), le corps de base (24) et le couvercle de vérin (28).

11. Procédé selon la revendication 10, **caractérisé en ce que** la liaison du disque intermédiaire (26), du corps de base (24) et du couvercle de vérin (28) s'effectue dans une étape de travail commune.
